# EUROPÄISCHE PATENTSCHRIFT

(11) **EP 1 488 155 B1**
(45) Veröffentlichungstag und Bekanntmachung des Hinweises auf die Patenterteilung: **17.08.2005**
(21) Anmeldenummer: 03717226.9
(22) Anmeldetag: 24.03.2003
(51) Int. Cl.: F16L 27/047, F16L 27/06

(54) **GELENKIGES KÜHLMITTELROHR**
ARTICULATED COOLANT PIPE
TUYAU DE REFRIGERANT ARTICULE

(30) Priorität: 26.03.2002 DE 10213444
(43) Veröffentlichungstag der Anmeldung: 22.12.2004
(73) Patentinhaber: Entner, Otmar, 88255 Baindt (DE)
(72) Erfinder: Entner, Otmar, 88255 Baindt (DE)
(74) Vertreter: Riebling, Peter, Dr.-Ing.
(86) Internationale Anmeldenummer: PCT/EP2003/003032
(87) Internationale Veröffentlichungsnummer: WO 2003/081109

(56) Entgegenhaltungen:
- DE-C- 591 109
- FR-A- 889 819
- US-A- 1 604 867
- US-A- 3 056 615

## Beschreibung

Die Erfindung betrifft ein gelenkiges Kühlmittelrohr nach dem Oberbegriff des Patentanspruches 1. Eine solche Gelenkverbindung ist beispielsweise aus der DE 591 109 C bekannt.

Der Anwendungszweck der vorliegenden Erfindung bezieht sich auf die Zuführung von Kühlmittel zu entsprechenden Bearbeitungsstellen an Werkzeugmaschinen, nämlich zu Werkzeugen und Schleifscheiben.

Bei Kühlmittelrohren ist es bisher lediglich bekannt, diese aus kugelartig ineinandergreifenden Kunststoffgliedern auszubilden, die vom Kühlmittel durchflossen sind.

Diese Kunststoffglieder sind lose ineinander gesteckt und dichten nur aufgrund von Reibungsschluss, mit dem Nachteil, dass ein Kühlmittel maximal mit einem Druck bis zu 2 bar dicht hindurchgeführt werden kann.

Bei einem Kühlmitteldruck von mehr als 2 bar sind die genannten Gelenkrohre nicht mehr lagestabil. Das heißt, sie verformen sich willkürlich unter der Einwirkung des Hochdruckmediums, und können daher das Kühlmittel nicht mehr an den Ort der Bearbeitung zielgenau heranführen.

Mit dem Gegenstand der WO 84/03132 ist eine Gelenkverbindung für Rohre bekannt geworden, bei dem das eine Rohr mit einem Kugelteil verbunden ist, welches abdichtend in eine Kugelaufnahme des anderen Rohres eingreift.

Die beiden Teile werden durch eine Überwurfmutter zusammen gehalten. Nachteil dieser bekannten Rohrverbindung ist jedoch, dass relativ anfällige paarweise angeordnete U-Ringdichtungen in der Überwurfmutter angeordnet sind und sich abdichtend einem Kugelteil anlegen sollen, während das andere Paar von U-Ringdichtungen sich im Gewindeteil des gegenüberliegenden Rohrabschnittes befindet und sich dichtend an der Innenseite der Überwurfmutter anlegen soll.

Derartige U-Ringdichtungen sind jedoch außerordentlich empfindlich gegen Beschädigungen und gegen Eindringen von Fremdkörpern. Es kommt damit zu einem schnellen Verlust der Dichtungswirkung und der Schwenkwinkel der beiden ineinandergreifenden Rohrteile ist begrenzt.

Eine derartige Rohrverbindung ist im übrigen lediglich in ihrer Anwendung für Tiefwasserrohre beschrieben, bei denen entsprechende Ständer zum Aufständern der Rohrleitungen vermieden werden sollen. Die genannten Kugelgelenkteile können sich also selbsttätig einmalig in ihre Schwenklage verstellen und sollen dann abdichtend in dieser Schwenklage flexibel verbleiben.

Aus diesem Grunde wurden auch relativ empfindliche O-Ringe verwendet, weil eine dauernde Verschwenkung der ineinander greifenden Kugelteile nicht vorgesehen ist.

Eine derartige Rohrverbindung ist also nicht für die ständige Verschwenkung von ineinander greifenden Kugelteilen eines gelenkigen Kühlmittelrohres geeignet.

Mit dem Gegenstand der DE 922562 ist eine weitere gelenkige Rohrverbindung dargestellt, bei der ebenfalls zueinander verschwenkbare Kugelteile ineinander greifen. Allerdings wird bei einer bevorzugten Ausführungsform eine Dichtung in Form einer Kugelfläche auf eine Geradfläche einer dort eingesetzten Dichtmanschette vorgeschlagen. Dieser bringt aber nur eine ungenügende Dichtungswirkung, die nicht für die Übertragung von Hochdruck geeignet ist.

Außerdem besteht der Nachteil, dass der dort genannte Dichtring mit seiner geraden Dichtfläche in einer formentsprechenden Ausnehmung in dem einen Rohrteil eingepasst ist, ohne dass die Möglichkeit besteht, dass sich diese Dichtmanschette verschieben ohne Druckeinfluss verfestigen kann. Nachteil der genannten Dichtverbindung ist also, dass die gezeigte Dichtverbindung nicht flexibel verschiebbar ist.

Im übrigen besteht der Nachteil, dass die gelenkig miteinander verbundenen Rohre lediglich in das jeweilige Kugelteil lose eingesteckt sind, was eine nur geringe mechanische Übertragungslast gestattet. Ein derartiges Gelenkrohr wäre deshalb ebenfalls nicht als Kühlmittelrohr geeignet, bei dem aufgrund des fließenden Hochdruckes starke Innenkräfte wirken, die in der axialen Richtung versuchen, die Kugelteile auseinander zu ziehen. Ebenso können keine hohen Zuglasten übertragen werden, wie sie insbesondere bei hängenden Kühlmittelrohren vorkommen.

Der Erfindung liegt deshalb die Aufgabe zugrunde, eine Gelenkverbindung für ein gelenkiges Kühlmittelrohr vorzuschlagen, mit der es erstmals gelingt, einerseits hohe Kühlmitteldrücke im Bereich von etwa 0 bis 150 bar zu übertragen und andererseits vorzusehen, dass das Kühlmittelrohr im halb angezogenen Zustand flexibel und einstellbar ist und eine gewisse Dichtungswirkung aufweist, und im voll angezogenen Zustand starr ausgebildet und in der Lage ist, einem Hochdruck von bis zu 150 bar standzuhalten und punktgenau, ohne mechanische Bewegung, das Hochdruckmedium an den Ort der Bearbeitung des Werkstückes zuzuleiten.

Die gestellt Aufgabe wird nach der Erfindung durch eine Gelenkverbindung nach Anspruch 1 gelöst.

Mit der gegebenen technischen Lehre ergibt sich nun der wesentliche Vorteil, dass nun eine selbständige Verfestigung und Abdichtung der Dichtbüchse in der besagten, in axialer Richtung ausgerichteten und geöffneten Konusausnehmung stattfindet, wenn die Überwurfmutter, welche das Kugelteil umgreift, entsprechend festgezogen wird.

Mit stärkerem Anziehen der Überwurfmutter wird damit das Kugelteil stärker in axialer Richtung auf die Dichtbüchse gepresst und diese wird ihrerseits in die in dieser Richtung konisch sich öffnende Konusausnehmung hineingepresst, wodurch es zu einer zusätzlichen Verfestigung und Abdichtung kommt.

Auf diese Weise kann es niemals geschehen, dass durch entsprechendes starkes Anziehen der Überwurfmutter die Dichtbüchse aus ihrem Dichtsitz herausschlüpft oder verloren geht.

Es wird also unter Hochdruckeinfluss eine sich selbsttätig verfestigende Dichtbüchse beschrieben, wie sie im Stand der Technik bisher nicht bekannt war.

Auch bei der in der DE 3442424 C2 genannten Dichtbüchse ist lediglich ein zylindrischer Dichtring vorhanden, der in eine formangepasste Ausnehmung am Rohrteil eingesetzt ist, was mit dem Nachteil verbunden ist, dass die Dichtung seitlich, das heißt in radiale Richtung in den Dichtspalt hineinschlüpfen kann und damit die Dichtwirkung verloren geht. Das genannte Problem der Erfindung stellt sich bei dieser Druckschrift auch nicht, weil zur Führung eines Heizmediums in einer flexiblen Rohrleitung lediglich ein Druck von etwa 2 bis 3 bar erforderlich ist und ein Kühlmittelfluss mit bis zu einem Hochdruck von 150 bar bei der bekannten Verbindung nicht gefordert ist.

Mit der gegebenen technischen Lehre ergibt sich noch der weitere Vorteil, dass ein sehr großer Verstellweg von dem Kugelteil zu dem Rohrteil gewährleistet ist. Ein derartiger Verstellwinkel ist z. B. im Bereich von +- 20 Grad verschwenkbar. Damit ergibt sich nun erstmals die Möglichkeit, dass ein gelenkiges Kühlmittelrohr auch für ein Kühlmittel unter Hochdruck vorgestellt wird, welches im halb angezogenen Zustand sehr flexibel und gut verschwenkbar ist und das bereits schon in der Lage ist, das Kühlmittel unter Mitteldruck von z. B. bis zu 2 bar an den Ort der Bearbeitung heranzuführen, um zu sehen, wie das Kühlmittel zugeführt werden kann. Es wird dann in diesem halb angezogenen Zustand das Kühlmittelrohr genau eingestellt und dann voll angezogen und bleibt dann unter Einwirkung von Hochdruckmedium bis zu 150 bar in dieser angezogenen Stellung vollkommen formstabil und führt punktgenau das Kühlmittel auf den Ort der Bearbeitung zu.

In einer bevorzugten Ausgestaltung besteht die Dichtungsbüchse aus einem geeigneten Kunststoffmaterial, wie z. B. einem Polytetrafluoräthylen oder einer Polyester-Kunststoffmischung oder auch einem Polyester-Grafit-Kunststoffgemisch und dergleichen mehr.

Die Wahl des Materials der Dichtungsbüchse hängt von der Agressivität des Kühlmediums ab, von der Temperatur und von anderen Eigenschaften. Das Material kann also jedes beliebige für den Anwendungsfall geeignetes Material sein.

Die restlichen Teile der genannten Verbindung bestehen bevorzugt aus einem Stahlmaterial oder aus einem (nicht rostenden) Edelstahl.

In einer bevorzugten ersten Ausgestaltung ist es vorgesehen, dass das Kugelteil werkstoffeinstückig mit dem daran anschließendem Rohrteil verbunden ist. Eine derartige Ausformung des Kugelteils erfolgt in einem Stauchvorgang, bei dem ein Rohrende zunächst konisch aufgestaucht und geweitet wird, bis es dann in einem entsprechenden Kugelgesenk zu einer stirnseitig offenen Kugel umgeformt wird.

In einer zweiten Ausführungsform der Erfindung ist es vorgesehen, dass das Kugelteil aus einem Metallmaterial besteht, welches eine Innenbohrung aufweist, in welche abdichtend das Rohrteil eingreift und in diese Ausnehmung eingelötet ist.

Es kann selbstverständlich bei der zweiten Ausführungsform auch vorgesehen sein, dass das Kugelteil aus einem anderen Material besteht als beispielsweise das Rohrteil.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: ein Halbschnitt einer ersten Ausführungsform eines gelenkigen Kühlmittelrohres in verschiedenen Schwenkstellungen
- Figur 2:: ein Halbschnitt einer zweiten Ausführungsform eines gelenkigen Kühlmittelrohres

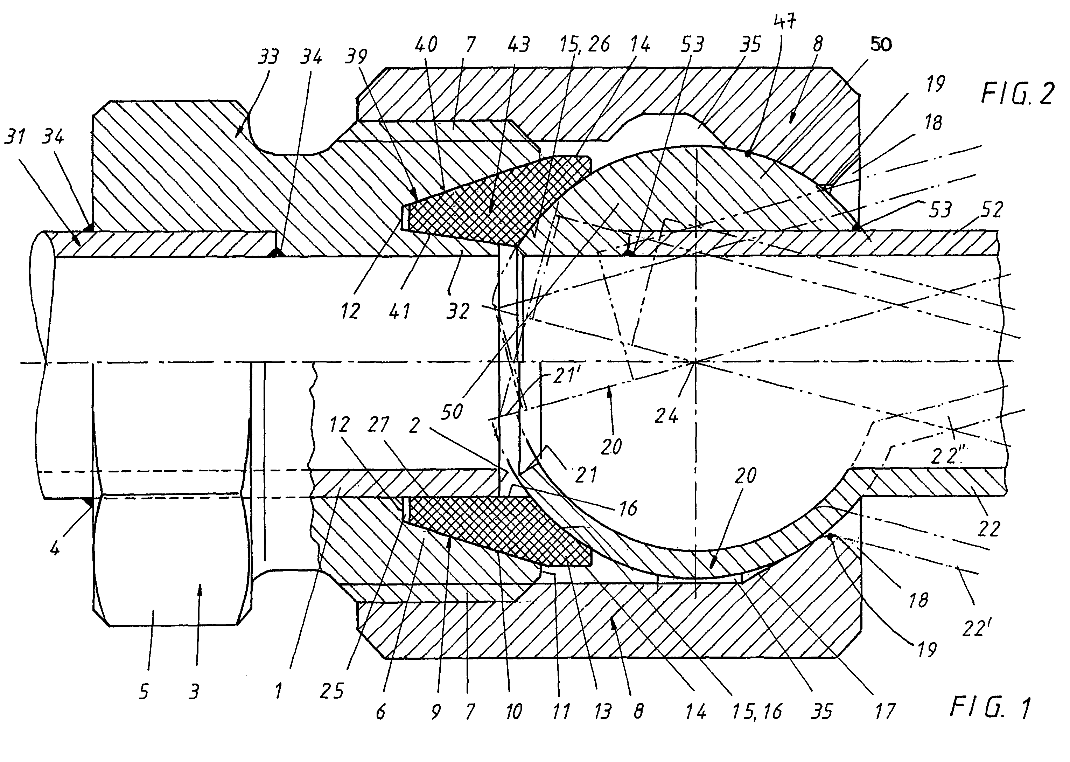

Die Figuren 1 und 2 zeigen jeweils Halbschnitte des gelenkigen Kühlmittelrohres, die zu der Längsmittelachse symmetrisch ausgebildet sind. Es sind in strichpunktierten Linien noch die verschiedenen, möglichen Schwenkstellungen angedeutet.

In dem Halbschnitt nach Figur 1 ist ein Gewindenippel 3 dargestellt, der einen Sechskant 5 ausbildet und in den ein Rohr 1 über eine Lötstelle 4 eingelötet ist.

Die Stirnseite 2 des Rohres 1 erstreckt sich bis kurz vor das Kugelteil 20 und bildet dort einen Freiraum, der um eine Pufferlänge 16 von der erfindungsgemäßen Dichtbüchse 13 überragt wird.

Der Gewindenippel 3 bildet ferner einen Gewindeteil 6, der an seiner vorderen Seite die Konusausnehmung 9 für den Einsatz der Dichtbüchse 13 bildet.

Hierbei bildet das Gewindeteil 6 eine in axialer Richtung sich nach außen erweiternde Konusfläche 10, welche die äußere Wandung Konusausnehmung 9 ausbildet.

Das Gewindeteil 6 bildet eine vordere Stirnseite 11, die von der Dichtbüchse 13 in axialer Richtung überragt wird. Dort bildet die Dichtbüchse 13 einen Zylinderteil 14, der die Stirnseite 11 in axialer Richtung überragt.

Wichtig ist, dass die Bodenfläche 12 der Konusausnehmung 9 einen Hohlraum 25 für die Dichtbüchse 13 bildet. Auf diese Weise wird gewährleistet, dass bei zunehmender Verfestigung des Dichtsitzes zwischen der Kugelfläche 15 des Kugelteils 20 und der zugeordneten Kugelfläche der Dichtbüchse 13 diese Dichtbüchse 13 in axiale Richtung in die Konusausnehmung 9 hineingestaucht wird und sich dort verfestigt und zusätzlich noch abdichtet.

Es wird also eine unter Einfluß durch das Hochdruckmedium sich verfestigende Dichtung für die Dichtbüchse 13 vorgeschlagen.

Es wird damit mit Sicherheit vermieden, dass beim Anziehen der Überwurfmutter 8 auf dem Gewinde 7 die Dichtbüchse 13 aus der Konusausnehmung 9 herausschlüpfen kann oder sich in radialer Richtung verformt, weil sie von allen Seiten her gestützt ist.

Die Innenseite der Dichtbüchse 13 liegt hierbei voll an dem Außenumfang des Rohres 1 an und wird ebenfalls dort abgestützt.

Die Überwurfmutter 8 bildet in Richtung zu dem Kugelteil 20 eine Freistellung 35, von der aus sich eine radial nach innen gerichtete Konusfläche 17 erstreckt, welches das Gegenlager zu dem Kugelteil 20 in Bezug zu der Dichtbüchse 13 ist.

Am Auslauf der Konusfläche 17 ist hierbei eine Anschlagkante 19 angeordnet, an der dann das Kugelteil bei entsprechender Verschwenkung anliegt.

Genauer gesagt, ist das Kugelteil in dem Ausführungsbeispiel nach Figur 1 werkstoffeinstückig mit einem daran ansetzenden Rohransatz 22 verbunden und der Übergangsbereich zwischen dem Rohransatz 22 und dem Kugelteil 20 ist im Bereich einer konischen Anfasung 18 um den Drehpunkt 24 in einem Drehwinkel von +- 20 Grad um den Drehpunkt 24 verschwenkbar.

Die Verschwenkung erfolgt hierbei in Pfeilrichtung 23 von einem Rohransatz 22" bis über den Rohransatz 22 in Neutralstellung und den Rohransatz 22" in der anderen, ausgeschwenkten Stellung.

Hierbei bewegt sich die Stirnseite 21 des Kugelteils niemals über die Dichtbüchse 13 hinweg, sondern hat in der eingezeichneten Stellung noch einen gewissen Abstand in Umfangsrichtung zu der Dichtbüchse.

In der anderen Schwenkstellung hat die Stirnseite 21" einen relativ großen Abstand zu der Dichtbüchse 13.

Wichtig ist im übrigen, dass die Dichtbüchse 13, 43 eine Kugelfläche 26 ausbildet, die formschlüssig und abdichtend mit dem Außenumfang und der Kugelfläche 15 des Kugelteils 20,50 zusammenwirkt.

Unterschiede zu der eben genannten Ausführungsform werden nun anhand der Figur 2 (zweite Ausführungsform) näher beschrieben. Die gleichen oder funktionsgleichen Teile sind hiermit mit gleichen Bezugszeichen versehen.

Im Unterschied zu der Figur 1 ist dargestellt, dass das Rohr 31 mit Hilfe von 2 Lötstellen 34 an der Innenseite des Gewindenippels 33 angelötet ist.

Diese Konstruktion hat den Vorteil, dass eine solche Verbindung im Durchlaufofen hergestellt werden kann, weil das Lotmittel an der linken Seite aufgetragen werden kann und im Durchlaufofen sich über die gesamte Fläche zwischen dem Rohr 31 und der Innenseite des Gewindenippels 33 verteilt.

Im Unterschied zu dem Ausführungsbeispiel nach Figur 1 ist die dort gezeigte Konusausnehmung 39 doppelt konisch ausgebildet, d.h. es gibt eine radial innen liegende Konusfläche 41 und eine radial außen liegende Konusfläche 40.

Im Ausführungsbeispiel nach Figur 1 war hingegen lediglich eine radial innen liegende Zylinderfläche 27 vorgesehen.

Der Vorteil der doppelt konischen Konusausnehmung 39 besteht darin, dass sich nun die so ausgebildete Dichtbüchse 43 nun an beiden Konusflächen 40, 41 anlegt und entsprechend verdichtet und verpresst, wobei wichtig ist, dass dort auch im Bereich der Bodenfläche ein Hohlraum 25 vorhanden ist, der ein axiales Spiel der Dichtbüchse 43 in Richtung auf die Bodenfläche 12 der Konusausnehmung 39 gestattet.

Der Gewindenippel 33 erstreckt sich also mit einem konischen Ansatz 32 bis in den Bereich des Kugeleingriffs.

Im Unterschied zu der Konusfläche 17 am Innenumfang der Überwurfmutter 8 nach Figur 1 zeigt die Figur 2 eine Überwurfmutter 8, die an ihrem Innenumfang eine Kugelfläche 47 ausbildet, die einen zusätzlichen Reibschluss auf dem Außenumfang des Kugelteils 50 ergibt. Damit ist der Rohransatz 52 auch bei nur wenig angezogener Überwurfmutter 8 relativ schwergängig verschwenkbar, was dazu führt, dass noch bei wenig angezogener Überwurfmutter 8 die gesamte Gelenkverbindung schon relativ starr ist, dennoch aber schon vorläufig gut abdichtet und gut auf den Ort der Werkstückbearbeitung ausgerichtet werden kann, ohne dass sie ihre Formstabilität verliert.

Das Ausführungsbeispiel nach Figur 2 zeigt auch, dass das Kugelteil 50 als Drehteil relativ massiv ausgebildet ist, welches eine Innenausnehmung aufweist, in welche der Rohransatz 52 eingreift. Dort ist wiederum durch eine Verlötung an der durchlaufenden Lötstelle 53 der gesamte Rohransatz 52 in das Kugelteil 50 eingelötet.

Vorteil des Ausführungsbeispiels nach Figur 2 ist, dass das gesamte Metallteil in einem Durchlaufofen durch rationelle Lötvorgänge hergestellt werden kann.

Zusammenfassend wird nochmals angeführt, dass die vorliegende Erfindung ein gelenkiges Kühlmittelrohr für die Zuführung von Kühlmittel zu entsprechenden Bearbeitungsstellen an Werkzeugmaschinen, nämlich zu Werkzeugen und Schleifscheiben, bestehend aus zwei Rohrstücken und einer gelenkigen Rohrverbindung, die die beiden Rohre einstellbar, feststellbar und dichtend miteinander verbindet, beschreibt. Sie ist dadurch gekennzeichnet, dass zur hochdruckfähigen Abdichtung der gelenkigen Verbindung des Rohres (1) mit dem Rohr (22) eine Dichtbüchse (13, 43) in einer konischen Aufnahme (9, 39) eines Gewindenippels (3, 33) aufgenommen ist, welche durch ein Kugelteil (20, 50), das an der zugeordneten Stirnseite des Rohres (22) ausgebildet ist, durch festziehen der zugeordneten Überwurfmutter (8) verpresst wird.

Die Dichtbüchse (13, 43) wird bei der Verpressung im Konus (9, 39) durch das Kugelteil (20, 50) in einen Hohlraum (25) gepresst, der eine ausreichende axiale Materialverdrängung der Dichtbüchse (13, 43) gewährleistet.

Die Öffnung des Rohres (20, 52) in dem Kugelteil (20, 50) verbleibt in jedem einstellbarem Zustand innerhalb des äußeren Randes der Kugelfläche (15), so dass die Hochdruckdichtfunktion der Rohrverbindung durch das Einwirken Kühlmittels auf die freie Kugelfläche (15) noch verstärkt wird.

Zwischen der Stirnseite des Rohres (1) und der Kugelfläche (26, 47) des Kugelteiles (20, 50) ist ein Abstand gegeben, so dass beim zuziehen der Schraubverbindung zwischen dem Gewindenippel (3) und der Überwurfmutter (8) die Dichtbüchse (13, 43) so weit in die Konusausnehmung (9, 39) gepresst werden kann, dass die Rohrverbindung dichtet und dennoch kein direkter Kontakt zwischen den beiden Teilen hergestellt wird. Die Konusausnehmung (9, 39) ist stirnseitig im Gewindenippel (3) ausgebildet, oder zwischen diesem und dem radial innenliegendem Rohr (1).

Die Aussenwandung der Konusausnehmung (9, 39) steht stirnseitig gegenüber der Innenwandung axial vor, so dass die Kugelpassung zwischen Kugelteil (20, 50) und Dichtbüchse (13, 43) optimal ihre Kraftkomponenten auf die Konuspassung zwischen der Dichtbüchse (13, 43) und dem Gewindenippel (3, 33) übertragen kann.

### Zeichnungs-Legende

- 1: Rohr
- 2: Stirnkante
- 3: Gewindenippel
- 4: Lötstelle
- 5: Sechskant
- 6: Gewindeteil
- 7: Gewinde
- 8: Überwurfmutter
- 9: Konusausnehmung
- 10: Konusfläche
- 11: Stirnseite
- 12: Bodenfläche
- 13: Dichtbüchse
- 14: Zylinderteil
- 15: Kugelfläche
- 16: Pufferlänge
- 17: Konusfläche
- 18: Anfasung
- 19: Anschlagkante
- 20: Kugelteil 20'
- 21: Stirnseite 21'
- 22: Rohransatz 22', 22,,
- 23: Pfeilrichtung
- 24: Drehpunkt
- 25: Hohlraum
- 26: Kugelfläche
- 27: Zylinderfläche

- 31: Rohr
- 32: Ansatz
- 33: Gewindenippel
- 34: Lötstelle
- 35: Freistellung

- 39: Konusausnehmung
- 40: Konusfläche
- 43: Dichtbüchse
- 47: Kugelfläche
- 50: Kugelteil
- 52: Rohransatz
- 53: Lötstelle

## Patentansprüche

1. Gelenkiges Kühlmittelrohr für die Zuführung von Kühlmittel zu entsprechenden Bearbeitungsstellen an Werkzeugmaschinen, nämlich zu Werkzeugen und Schleifscheiben, bestehend aus zwei Rohrstücken (1, 22; 31, 52) und einer gelenkigen Rohrverbindung (3,33, 8, 13,43, 20,50), die die beiden Rohre (1, 22; 31, 52) einstellbar, feststellbar und dichtend miteinander verbindet, wobei zur Abdichtung der gelenkigen Verbindung des einen Rohres (1; 31) mit dem anderen Rohr (22; 52) eine Dichtbüchse (13, 43) in einer konischen Aufnahme (9, 39) eines Gewindenippels (3, 33) aufgenommen ist, welche Dichtbüchse (13, 43) durch ein Kugelteil (20, 50), das an der zugeordneten Stirnseite des Rohres (22; 52) ausgebildet ist, durch Festziehen einer zugeordneten Überwurfmutter (8) durch dichtende Anlage sowohl in der Aufnahme (9, 39) des Gewindenippels (3, 33), als auch an dem Kugelteil (20, 50) verpresst wird, **dadurch gekennzeichnet, dass** der Gewindenippel (3, 33) eine sich axial in Richtung Kugelteil (20, 50) und nach radial außen erweiternde Konusfläche (10, 40) bildet, welche die äußere Wandung der konischen Aufnahme (9, 39) für die Dichtbüchse (13, 43) ausbildet und dass entweder die konische Aufnahme (39) stirnseitig im Gewindenippel (33) doppelt konisch ausgebildet ist, so dass es die radial außen liegende Konusfläche (40) und eine radial innen liegende Konusfläche (41) gibt, oder aber dass die konische Aufnahme (9) stirnseitig im Gewindenippel (3) zwischen der radial außen liegende Konusfläche (10) und einer radial innen liegenden Zylinderfläche (27) des Rohres (1) ausgebildet ist.

2. Gelenkiges Kühlmittelrohr nach Anspruch 1, **dadurch gekennzeichnet, dass** die Dichtbüchse (13, 43) bei der Verpressung im Konus (9, 39) durch das Kugelteil (20, 50) in einen Hohlraum (25) gepresst wird, der eine ausreichende axiale Materialverdrängung der Dichtbüchse (13, 43) gewährleistet.

3. Gelenkiges Kühlmittelrohr nach Anspruch 1 oder 2, **dadurch gekennzeichnet, dass** die Dichtbüchse (13, 43) an ihrer dem Kugelteil (20, 50) zugewandten Seite eine Kugelfläche (15) aufweist, die eine genaue Passung zwischen diesen beiden Teilen gewährleistet.

4. Gelenkiges Kühlmittelrohr nach einem der Ansprüche 1 bis 3, **dadurch gekennzeichnet, dass** die Aussenwandung (10; 40) der Konusausnehmung (9, 39) stirnseitig gegenüber der Innenwandung (27; 41) axial vorsteht.

5. Gelenkiges Kühlmittelrohr nach einem der Ansprüche 1 bis 4, **dadurch gekennzeichnet, dass** eine Stirnseite (2) des Rohres (1) sich bis kurz vor das Kugelteil (20) erstreckt und dort einen Freiraum bildet, der um eine Pufferlänge (16) der Dichtbüchse (13) überragt wird.

6. Gelenkiges Kühlmittelrohr nach einem der Ansprüche 1 bis 5, **dadurch gekennzeichnet, dass** ein Gewindeteil (6) des Gewindenippels (3, 33) eine dem Kugelteil (20, 50) zugewandte Stirnseite (11) bildet, die von der Dichtbüchse (13, 43) in axialer Richtung überragt wird.

7. Gelenkiges Kühlmittelrohr nach Anspruch 6, **dadurch gekennzeichnet, dass** die Dichtbüchse (13, 43) einen Zylinderteil (14) bildet, der die Stirnseite (11) des Gewindeteils (6) des Gewindenippels (3, 33) in axialer Richtung überragt.

8. Gelenkiges Kühlmittelrohr nach einem der Ansprüche 1 bis 7, **dadurch gekennzeichnet, dass** das Material der Dichtbüchse (13, 43) im axialen Querschnitt V-förmig profiliert ist.

## Claims

1. Articulated coolant pipe for supplying coolant to corresponding machining points on machine tools, namely to tools and grinding wheels, consisting of two tubular pieces (1, 22; 31, 52) and an articulated pipe connection (3, 33, 8, 13, 43, 20, 50), which connects the two pipes (1, 22; 31, 52) to one another in an adjustable, lockable and sealing manner, wherein a sealing sleeve (13, 43) is received in a conical receiver (9, 39) of a threaded nipple (3, 33) to seal the articulated connection of the one pipe (1; 31) to the other pipe (22; 52), which sealing sleeve (13, 43) is compressed by a spherical part (20, 50) which is formed on the associated end face of the pipe (22, 52) by sealing contact both in the receiver (9, 39) of the threaded nipple (3, 33) and also on the spherical part (20, 50) which is formed on the associated end face of the pipe (22, 52), by tightening an associated union nut (8), **characterised in that** the threaded nipple (3, 33) forms a conical face (10, 40) which widens axially in the direction of the spherical part (20, 50) and radially outwardly and which forms the outer wall of the conical receiver (9, 39) for the sealing sleeve (13, 43) and **in that** either the conical receiver (39) is formed doubly conically on the end face in the threaded nipple (33) so it provides the radially outer conical face (40) and a radially inner conical face (41), or else the conical receiver (9) is formed on the end face in the threaded nipple (3) between the radially outer conical face (10) and a radially inner cylindrical face (27) of the pipe (1).

2. Articulated coolant pipe according to claim 1, **characterised in that** the sealing sleeve (13, 43) when being compressed in the cone (9, 39) is pressed by the spherical part (20, 50) into a cavity (25) which ensures adequate axial material displacement of the sealing sleeve (13, 43).

3. Articulated coolant pipe according to claim 1 or 2, **characterised in that** the sealing sleeve (13, 43), on its side facing the spherical part (20, 50) has a spherical face (15) which ensures a precise fit between these two parts.

4. Articulated coolant pipe according to any one of claims 1 to 3, **characterised in that** the outer wall (10; 40) of the conical recess (9, 39) projects axially on the end face relative to the inner wall (27; 41).

5. Articulated coolant pipe according to any one of claims 1 to 4, **characterised in that** an end face (2) of the pipe (1) extends to shortly before the spherical part (20) and forms a free space there which is topped by a buffer length (16) of the sealing sleeve (13).

6. Articulated coolant pipe according to any one of claims 1 to 5, **characterised in that** a threaded part (6) of the threaded nipple (3, 33) forms an end face (11) which faces the spherical part (20, 50) and is topped by the sealing sleeve (13, 43) in the axial direction.

7. Articulated coolant pipe according to claim 6, **characterised in that** the sealing sleeve (13, 43) forms a cylindrical part (14) which tops the end face (11) of the threaded part (6) of the threaded nipple (3, 33) in the axial direction.

8. Articulated coolant pipe according to any one of claims 1 to 7, **characterised in that** the material of the sealing sleeve (13, 43) is profiled in a V-shape in the axial cross-section.

## Revendications

1. Tuyau de réfrigérant articulé pour l'amenée de réfrigérant jusqu'à des points d'usinage appropriés de machines-outils, à savoir jusqu'à des outils et des meules, composé de deux éléments tubulaires (1, 22 ; 31, 52) et d'un raccord de tuyaux articulé (3, 33, 8, 13, 43, 20, 50) qui relie les deux tuyaux (1, 22 ; 31, 52) de manière réglable, blocable et étanche, étant précisé que pour rendre étanche le raccord articulé entre un tuyau (1 ; 31) et l'autre tuyau (22 ; 52), un manchon d'étanchéité (13, 43) est logé dans un logement conique (9, 39) d'un raccord fileté (3, 33), lequel manchon d'étanchéité (13, 43) est comprimé par un élément sphérique (20, 50), formé sur le côté frontal associé du tuyau (22 ; 52), par serrage d'un écrou-raccord associé (8), grâce à l'application étanche à la fois dans le logement (9, 39) du raccord fileté (3, 33) et contre l'élément sphérique (20, 50), **caractérisé en ce que** le raccord fileté (3, 33) forme une surface conique (10, 40) qui va en s'élargissant axialement vers l'élément sphérique (20, 50) et radialement vers l'extérieur et qui définit la paroi extérieure du logement conique (9, 39) pour le manchon d'étanchéité (13, 43), et **en ce que** soit le logement conique (39) a la forme d'un double cône côté frontal dans le raccord fileté (33), de sorte qu'il y a la surface conique (40) située radialement à l'extérieur et une surface conique (41) située radialement à l'intérieur, soit le logement conique (9) est formé côté frontal dans le raccord fileté (3) entre la surface conique (10) située radialement à l'extérieur et une surface cylindrique (27) du tuyau (1) située radialement à l'intérieur.

2. Tuyau de réfrigérant articulé selon la revendication 1, **caractérisé en ce que** le manchon d'étanchéité (13, 43), lorsqu'il est comprimé dans le cône (9, 39) par l'élément sphérique (20, 50), est pressé dans une cavité (25) qui garantit un refoulement axial suffisant de la matière du manchon (13, 43).

3. Tuyau de réfrigérant articulé selon la revendication 1 ou 2, **caractérisé en ce que** le manchon d'étanchéité (13, 43) présente, sur son côté tourné vers l'élément sphérique (20, 50), une surface sphérique (15) qui garantit un ajustement précis entre ces deux éléments.

4. Tuyau de réfrigérant articulé selon l'une des revendications 1 à 3, **caractérisé en ce que** la paroi extérieure (10 ; 40) du logement conique (9, 39) dépasse axialement, côté frontal, par rapport à la paroi intérieure (27 ; 41).

5. Tuyau de réfrigérant articulé selon l'une des revendications 1 à 4, **caractérisé en ce qu'**un côté frontal (2) du tuyau (1) s'arrête juste avant l'élément sphérique (20) et forme à cet endroit un espace libre que le manchon d'étanchéité (13) dépasse d'une longueur d'amortissement (16).

6. Tuyau de réfrigérant articulé selon l'une des revendications 1 à 5, **caractérisé en ce qu'**une partie filetée (6) du raccord fileté (3, 33) forme un côté frontal (11) tourné vers l'élément sphérique (20, 50), qui est dépassé dans le sens axial par le manchon sphérique (13, 43).

7. Tuyau de réfrigérant articulé selon la revendication 6, **caractérisé en ce que** le manchon d'étanchéité (13, 43) forme une partie cylindrique (14) qui dépasse le côté frontal (11) de la partie filetée (6) du raccord fileté (3, 33) dans le sens axial.

8. Tuyau de réfrigérant articulé selon l'une des revendications 1 à 7, **caractérisé en ce que** la matière du manchon d'étanchéité (13, 43) est profilée en V en section transversale axiale.
